# FASCICULE DE BREVET EUROPEEN

(11) **EP 0 484 195 B1**
(45) Date de publication et mention de la délivrance du brevet: **31.08.1994**
(21) Numéro de dépôt: 91402778.4
(22) Date de dépôt: 18.10.1991
(51) Int. Cl.: G01P 3/44

(54) **Roulements à capteur d'informations**
Wälzlager mit Messaufnehmer
Rollbearing with measurement sensor

(30) Priorité: 30.10.1990 FR 9013430
(43) Date de publication de la demande: 06.05.1992
(73) Titulaire: S.N.R. ROULEMENTS, 74010 Annecy Cédex (FR)
(72) Inventeur: Coux, Isabelle, F-74600 Seynod (FR); Peilloud, Fernand, F-74540 Alby-sur-Cheran (FR)
(74) Mandataire: Ernst-Schonberg, Michel

(56) Documents cités:
- EP-A- 0 250 275
- EP-A- 0 327 434
- FR-A- 2 133 955
- FR-A- 2 398 308

## Description

L'invention concerne un roulement à capteur d'informations qui possède une bague fixe, une bague tournante, des chemins de roulement de réception de corps roulants au contact des dites bagues, au moins un joint d'étanchéité monté sur la bague fixe qui porte un ensemble capteur, et un moyen codeur monté sur la bague tournante.

La publication FR-A-2398308 décrit un roulement dans lequel l'ensemble capteur est monté dans un joint d'étanchéité fixé sur la bague extérieure en contact frottant sur un moyen codeur.

Lorsque le moyen codeur est soumis à des dilatations axiales et radiales consécutives à l'échauffement du roulement en cours de fonctionnement, la ligne de contact de la lèvre d'étanchéité subit des variations qui induisent dans le joint des déformations préjudiciables à sa durée de vie et à la fidélité des signaux générés.

Conformément à l'invention ce problème est résolu en ce que l'ensemble capteur s'étend axialement dans la partie étanche du roulement hors de la face interne du joint d'étanchéité et possède une partie active située dans le plan radial du moyen codeur et d'un anneau de rétention élastique tournant dudit moyen codeur, au, contact de la lèvre d'étanchéité du joint.

Dans le roulement ainsi réalisé les positions relatives de l'ensemble capteur et du moyen codeur n'ont aucune influence sur l'étanchéité du roulement.

Par ailleurs l'ensemble des déformations axiales et radiales de l'élément codeur est absorbé par l'élasticité de l'anneau.

D'autres caractéristiques et avantages de l'invention apparaîtront à la lecture d'un exemple de réalisation du roulement en référence au dessin annexé dans lequel :

La figure 1 est une vue en coupe axiale du roulement.

La figure 2 est une section radiale d'un détail du roulement suivant la ligne II - II de la figure 1.

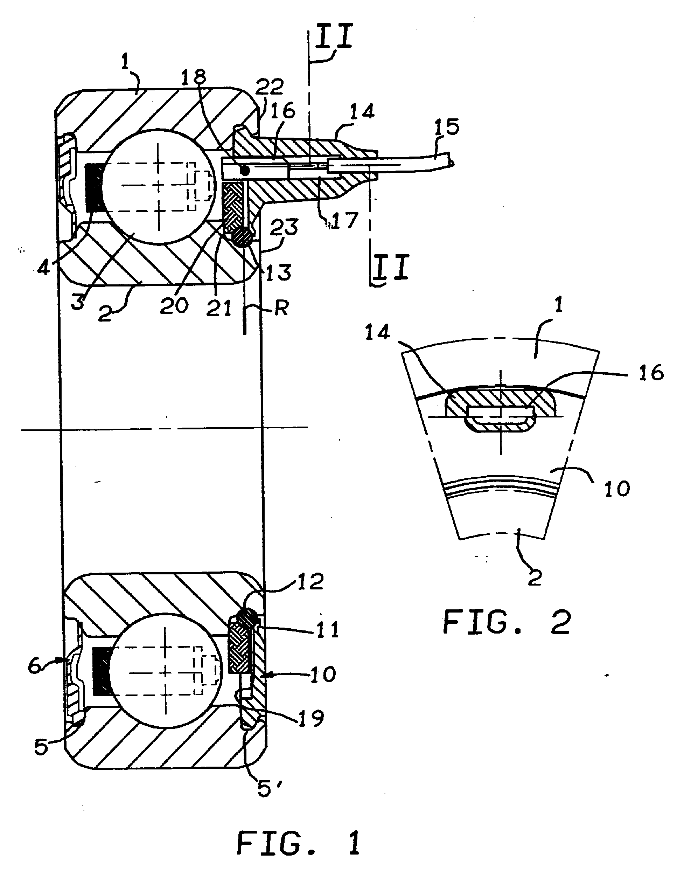

Selon le dessin, le roulement représenté à la figure 1, possède une bague extérieure 1 et une bague intérieure 2 susceptibles d'être, au choix, fixes ou tournantes en fonction du montage utilisé.

Les bagues 1 et 2 possèdent des chemins de roulement pour des corps roulants 3 disposés dans une cage 4 qui en assure la retenue et le positionnement angulaire.

La bague extérieure 1 supposée fixe dans le mode d'application représenté, porte une gorge 5 de montage d'un joint d'étanchéité 6 conventionnel à lèvre souple placé d'un côté du roulement entre les bagues 1 et 2.

Un joint d'étanchéité complémentaire 10 est monté dans une gorge 5′ de la bague fixe 1 et possède une lèvre d'étanchéité souple 11 en appui sur un anneau de rétention 12 élastique du moyen codeur 20.

La bague intérieure 2, supposée à rotation dans l'application envisagée, porte l'anneau 12 monté à serrage élastique dans une gorge 13 de ladite bague (située sensiblement dans le plan de la gorge 5′). L'anneau 12 tourne de la sorte conjointement avec le moyen codeur 20 et la bague intérieure 2.

La face externe du joint d'étanchéité 10 porte un bossage 14 angulairement localisé qui s'étend axialement vers l'extérieur du roulement. Ledit bossage 14 ne nécessite pas de modifier la position des faces 22 de la bague extérieure 1 et 23 de la bague intérieure 2, de telle sorte que l'enveloppe du roulement notamment constitué des bagues 1 et 2, reste dans les définitions données par la norme internationale ISO "Roulements radiaux, dimensions d'encombrement, plan général".

D'autre part, le bossage 14 ne comporte pas de développements radiaux susceptibles de gêner l'accès des faces 22 et 23 lors de l'opération de mise en place du roulement dans le mécanisme où il doit être monté.

Ces caractéristiques d'encombrement et d'accessibilité cumulées font que le roulement capteur ainsi conçu peut se substituer, aux servitudes de sortie de fil 15 près, au roulement sans capteur d'informations de même définition ISO 15.

Le bossage 14 abrite une traversée étanche de conducteur électrique de raccordement 15 d'un ensemble capteur 16. La traversée débouche dans une cavité 17 de forme intérieure prismatique qui contient de manière étanche la partie active 18 de l'ensemble capteur 16.

Selon l'invention la partie active de l'ensemble capteur s'étend axialement dans la partie étanche du roulement limitée latéralement par les joints d'étanchéité 6 et 10, hors de la face interne 19 du joint 10.

Selon une autre caractéristique constructive, la partie active 18 est située dans le plan radial R contenant le moyen codeur 20 immobilisé axialement et radialement contre un épaulement 21 de la bague intérieure 2 par l'anneau 12.

Le moyen codeur 20 dont la structure est connue en soi et qui ne fait pas partie de l'invention, l'anneau 12 et la partie active 18 de l'ensemble capteur sont situés sensiblement dans le même plan radial R dans une position relative indépendante des variations géométriques du moyen codeur 20 sous l'effet des échauffements.

Par ailleurs, le joint d'étanchéité 10 porteur de l'ensemble capteur peut équiper une bague de roulement conventionnelle munie d'une gorge de montage.

## Revendications

1. Roulement à capteur d'informations qui possède une bague fixe (1), une bague tournante (2), des chemins de roulement de réception des corps roulants (3) au contact desdites bagues, au moins un joint d'étanchéité (10) monté sur la bague fixe (1) et qui porte un ensemble capteur (16) et un moyen codeur (20) monté sur la bague tournante (2), caractérisé par le fait que l'ensemble capteur (16) s'étend axialement dans la partie étanche du roulement hors de la face interne (19) du joint d'étanchéité (10) et possède une partie active (18) située dans un plan radial contenant le moyen codeur (20) et un anneau (12) de rétention élastique tournant dudit moyen codeur (20), au contact de la lèvre d'étanchéité (11) du joint (10).

2. Roulement selon la revendication 1, caractérisé par le fait que le joint d'étanchéité (10) présente sur sa face externe un bossage (14) de traversée de conducteur électrique qui débouche dans une cavité de forme intérieure prismatique qui contient la partie active (18) de l'ensemble capteur (16).

## Patentansprüche

1. Wälzlager mit Meßaufnehmer, das aufweist einen feststehenden Ring (1), einen drehbaren Ring (2), Rollwege zur Aufnahme von Rollkörpern (3), die die Ringe berühren, wenigstens eine Dichtung (10), die am Ring (1) befestigt ist und die eine Aufnehmeranordnung (16) trägt und eine Codieranordnung (20), welche am drehbaren Ring (2) angeordnet ist, dadurch gekennzeichnet, daß die Aufnehmeranordnung (16) sich axial in den dichten Abschnitt des Wälzlagers außerhalb der Innenfläche (19) der Dichtung (10) erstreckt und einen aktiven Abschnitt (18) besitzt, der in einer radialen Ebene angeordnet ist, welche die Codieranordnung (20) und einen drehbaren elastischen Haltering (12) der Codieranordnung (20) enthält, der die Dichtlippe (11) der Dichtung (10) berührt.

2. Wälzlager nach Anspruch 1, dadurch gekennzeichnet, daß die Dichtung (10) auf ihrer Außenfläche einen Vorsprung (14) mit einem Durchlaß für einen elektrischen Leiter aufweist, welcher in einer inneren Aussparung mit prismatischer Gestalt mündet, die den aktiven Abschnitt (18) der Aufnehmeranordnung (16) aufnimmt.

## Claims

1. A roller bearing with an information sensor which comprises a fixed ring (1), a rotary ring (2), raceways for receiving rolling bodies (3) in contact with these rings, at least one sealing joint (10) mounted on the fixed ring (1) which comprises a sensor assembly (16) and an encoding means (20) mounted on the rotary ring (2), characterized in that the sensor assembly (16) extends axially into the leak-tight portion of the roller bearing outside the inner surface (19) of the sealing joint (10) and comprises an active portion (18) disposed in a radial plane containing the encoding means (20) and a rotary elastic retention ring (12) of the encoding means (20), in contact with the sealing lip (11) of the joint (10).

2. A roller bearing as claimed in claim 1, characterized in that the outer surface of the sealing joint (10) comprises a boss (14) for the passage of an electrical conductor which opens out into a cavity of prismatic internal shape which contains the active portion (18) of the sensor assembly (16).
